Europäisches Patentamt

European Patent Office

Office européen des brevets

(11) Veröffentlichungsnummer: **0 210 392**
**A2**

(12) **EUROPÄISCHE PATENTANMELDUNG**

(21) Anmeldenummer: 86107974.7

(22) Anmeldetag: 11.06.86

(51) Int. Cl.⁴: **B 01 D 53/34**

(30) Priorität: 29.06.85 DE 3523326

(43) Veröffentlichungstag der Anmeldung:
04.02.87 Patentblatt 87/6

(84) Benannte Vertragsstaaten:
AT BE CH DE FR GB IT LI LU NL SE

(71) Anmelder: STEAG AG
Bismarckstrasse 54 Postfach 10 37 62
D-4300 Essen 1(DE)

(72) Erfinder: Eichholtz, Andreas, Dr.-Ing.
Baas-Brathe-Weg 16
D-4350 Recklinghausen(DE)

(72) Erfinder: Weiler, Helmut, Ing. grad.
Hofer Heide 31
D-5620 Velbert 1(DE)

(54) Verfahren zur Abscheidung von NOx aus Gasen, insbesondere Rauchgasen.

(57) Bei unserem Verfahren zur Abscheidung von $NO_x$ aus Gasen, insbesondere Rauchgasen, bei dem das $NO_x$ aus dem Rauchgas an einem festen Adsorptionsmittel, insbesondere Aktivkohle/Aktivkoks, unter Zugabe eines Reduktionsmittels, insbesondere Ammoniak, CO, Wasserstoff, katalytisch abgetrennt wird und bei dem das Adsorptionsmittel mehrmals hintereinander mit dem zu entstickenden Gas in Kontakt gebracht wird, ist zur weiteren $NO_x$-Minderung vorgesehen, daß das Adsorptionsmittel mit zumindest einem Anteil an Reduktionsmittel vorbeladen und danach mit dem zu entstickenden Gasstrom in Berührung gebracht wird.

EP 0 210 392 A2

./...

Fig.1

1

STEAJ Aktiengesellschaft
Bismarckstraße 54

4300 Essen 1

Stichwort: Vorbeladung
Az. 805

Verfahren zur Abscheidung von $NO_x$ aus Gasen, insbesondere Rauchgasen

Die Erfindung betrifft ein Verfahren zur Abscheidung von
$NO_x$ aus Abgasen, insbesondere Rauchgasen, der im Oberbegriff des vorstehenden Anspruches 1 genannten Art.

Unter Rauchgasen werden solche Rauchgase verstanden, die
bei der Verbrennung schwefelarmer Brennstoffe entstehen
bzw. deren Schwefeldioxidanteile durch eine vorgeschaltete Entschwefelungsanlage basierend auf einem z.B. nassen,
halbtrockenen, trockenen Verfahren vermindert werden.
Als Absorptionsmittel zur Entfernung der Schwefeldioxidanteile kommen dabei z.B. Lösungen bzw. Suspensionen auf
Ca-, Mg-, Na-, $NH_3$-Basis zum Einsatz, wie dies z.B. in
W. Kaminsky, Chem. Ing.-Technik 55 (1983), Seite 673 ff
beschrieben ist. Neben einer weitgehenden Reduzierung
der Schwefeloxide wird aber heute eine Minderung des Stickoxidgehaltes in den Rauchgasen gefordert. Ein Verfahren
der im Oberbegriff des vorstehenden Anspruches 1 genannten
Art ist z.B. aus der DE-OS 29 11 712 bekannt, bei dem
in einer Wanderschicht aus kohlenstoffhaltigen Adsorptionsmitteln nach dosierter Zugabe von gasförmigen Ammoniak
als Reduktionsmittel die Stickstoffoxide katalytisch zu
Stickstoff unter Erzeugung von Wasserdampf reduziert werden.
Dies Verfahren hat den Nachteil, daß durch die alleinige
Zugabe des Reduktionsmittels in das Rauchgas vor dem Eintritt desselben in das Adsorptionsmittelbett ein ausreichend hoher Abscheidegrad von größer als 60 % nur dann
erreicht wird, wenn das behandelte Abgas einen sehr hohen

2

Reduktionsmittelüberschuß bezogen auf den abzuscheidenden Stickstoffoxidgehalt des Abgasstroms aufweist.

Es ist daher die Aufgabe der vorliegenden Erfindung, ein Verfahren der im Oberbegriff des vorstehenden Anspruches 1 genannten Art anzugeben, bei dem ein hoher Abscheidungsgrad ohne unzulässig hohen Reduktionsmittelüberschuß erreicht wird.

Diese Aufgabe wird erfindungsgemäß durch die Merkmale im Kennzeichen des Anspruches 1 gelöst.

Die Erfindung geht dabei von der Erkenntnis aus, daß die Reaktion zwischen den Stickoxiden und dem Reduktionsmittel an der äußeren und inneren Oberfläche des Adsorptionsmittels abläuft. Durch die erfindungsgemäße Vorbeladung wird erreicht, daß an der äußeren und inneren Reaktionsoberfläche des Feststoffadsorptionsmittels ständig Reduktionsmittel gespeichert wird und für die Reaktion mit den im Abgas enthaltenen Stickoxiden zur Verfügung steht. Im Vergleich zu einer Zufuhr des Reduktionsmittels in den Gasstrom vor dessen Inkontaktbringen mit dem Adsorptionsmittel muß das Reduktionsmittel bei Vorbeladung des Adsorptionsmittels nicht erst aus der Gasphase durch Film- und/oder Porendiffusion an die innere Reaktionsoberfläche des Adsorptionsmittels gelangen, so daß die Vorbeladung zu einer entsprechenden Erhöhung der Reaktionsgeschwindigkeit führt; mithin steht jedem Stickstoffoxid-Molekül, das durch die Poren zur inneren Oberfläche diffundiert, sofort ein Molekül des Reduktionsmittels als Reduktionspartner gegenüber. Vorzugsweise erfolgt die Vorbeladung gemäß den Merkmalen des Anspruches 2. Dabei wird eine Führung der beiden Stoffströme im Gegenstrom bevorzugt. Der Transport des Adsorptionsmittels kann dabei in Richtung der Schwerkraft erfolgen (Wanderbett) oder z.B. auch durch Fluidisierung über das Reduktionsmittel (z.B. Wirbelrinne)

**3**

oder durch mechanische Einbauten innerhalb der Vorbeladungsstufe, die die Bewegung auf die Adsorptionsmittelschüttung übertragen. Wie bereits erwähnt ist es von Vorteil, das erfindungsgemäße Verfahren einer Rauchgasentschwefelung nachzuschalten. Es ist daher vorgesehen, daß das beladene Adsorptionsmittel in einen vorentschwefelten Rauchgasstrom eingebracht wird, der nach der Entschwefelung auf eine Temperatur von 60 °C - 180 °C vorzugsweise 80 °C - 180 °C erwärmt wird.

Eine einfache Verfahrensführung wird erreicht, wenn das vorbeladene Adsorptionsmittel einem Wanderbettreaktor zugeführt wird. Dabei wird vorzugsweise an dessen oberem Ende das vorbeladene Adsorptionsmittel aus der Vorbeladungsstufe aufgegeben und an dessen unterem Ende abgenommen, wobei jeweils geeignete Zufuhr- bzw. Abzugsschleusen vorgesehen sind. Abrieb und bei Vorschaltung einer Entschwefelung evtl. gebildete feste Reaktionsprodukte zwischen dem Reduktionsmittel und den restlichen Schwefeloxiden werden nach dem Austritt aus dem Reaktor vom Adsorptionsmittel entfernt (z.B. Absieben, Sichten) um einen Aktivitätsverlust durch Verstopfung der Poren des Feststoffadsorptionsmittels zu vermeiden.

Vorstehend erwähnter Temperaturbereich, bei dem das vorbeladene Adsorptionsmittel in Berührung mit dem zu entstickenden Gasstrom gebracht wird, kann durch Wiederaufheizung des vorzugsweise entschwefelten Abgases mittels Wärmetauscher (regenerativ mit Rohrauchgasen oder mit Fremdenergie) erfolgen. Aus einem Wanderbettreaktor kann das vorbeladene Adsorptionsmittel auch einem Festbettreaktor aufgegeben werden. In diesen beiden Fällen ist es möglich, das zu entstickende Rauchgas und das Reduktionsmittel zwei Adsorptionsmittelreaktoren aufzugeben, die abwechselnd mit Rauchgas durchströmt bzw. mit dem Reduktionsmittel beladen werden, wie dies im Anspruch 6 beansprucht ist. Beim Um-

4

schalten des mit Reduktionsmittel vorbeladenen Reaktors auf Abgas- bzw. Rauchgasbetrieb erfolgt eine Reaktion des adsorptiv gebundenen Reduktionsmittels mit den Stickstoffoxiden des Abgases. Reaktionsprodukte von Schwefeloxiden mit dem Reduktionsmittel werden durch Austrag einer Teilmenge des Adsorptionsmittels entfernt und das Adsorptionsmittel wird nach der Regeneration in einen der Behälter zurückgeführt. Die Regeneration von Feststoffadsorptionsmitteln ist an sich bekannt.

In vielen Fällen reicht es aus, daß zur Vorbeladung das Reduktionsmittel in Mischung mit einem Verdünnungsgas verwendet wird.

Gemäß Anspruch 8 wird bei der Vorbeladung überschüssiges Reduktionsmittel dem Abgasstrom vor dessen Kontakt mit dem vorbeladenen Adsorptionsmittel zugesetzt, d.h. die Restanteile an Reduktionsmittel, die in der Vorbeladungsstufe nicht vom Adsorptionsmittel aufgenommen werden, können aus der Gasphase der Vorbeladungsstufe in das Abgas vor Eintritt in den Entstickungsreaktor eingemischt werden. Falls die Entstickung in Wanderbettreaktoren erfolgt, ist es zweckmäßig, frisches Adsorptionsmittel zum Ausgleich des Abriebs dem Adsorptionsmittel bei Vorbeladung zuzusetzen. Im Zusammenhang mit der Reinigung in Wanderbettreaktoren soll noch darauf hingewiesen werdnen, daß die optimale Wanderungsgeschwindigkeit des Adsorptionsmittels durch den Adsorptionsmittelreaktor im wesentlichen von den Entstickungsparatametern (vornehmlich dem Abscheidegrad der Stickoxide) und der Druckverluständerung im Wanderbett bestimmt wird.

Gemäß Anspruch 10 wird die Vorbeladung des Adsorptionsmittels über die Feststoffverweilzeit des Adsorptionsmittels mit dem Reduktionsmittel, die Konzentration des Reduktionsmittels im Beladungsgas und/oder die Temperatur in

**5**

der Vorbeladungsstufe eingestellt.

Es kann zweckmäßig sein, daß entsprechend dem abzuscheidenden Stoffstrom an Stickoxiden gemäß Anspruch 11 verfahren wird, dabei wird jedoch angestrebt, daß ein wesentlicher Anteil des Reduktionsmittels über die Vorbeladung der katalytischen Reaktion zugeführt wird. Es wird daher wiederum bevorzugt, daß 20 % - 100 % der Vorbeladung zugeführt werden und nur 80 % - 0 % in das Abgas vor katalytische Reaktion eingeleitet werden, vorzugsweise 50 % - 100 % bzw. 50 % - 0 %.

Zusammenfassend kann gesagt werden, daß durch die Vorbeladung des Adsorptionsmittels mit Reduktionsmittel die Reaktionsgeschwindigkeit erhöht und der Gehalt an überschüssigem Ammoniak erniedrigt werden kann, wie das nachfolgende Beispiel zeigt, bei dem der Gehalt an überschüssigem Ammoniak in gereinigtem Gas $6,0 \text{ mg/m}^3_n$ gegenüber dem Reduktionsmittelüberschuß bei der bekannten Verfahrensführung in Höhe von ca. $30 \text{ mg/m}^3_n$.

Die Erfindung soll nun anhand der beigefügten Figuren und in einem Beispiel näher beschrieben werden. Es zeigt:

Figur 1 eine Darstellung des Verfahrensschemas für $NO_x$-Abscheidung in einem Wanderschichtreaktor bei vorheriger $SO_2$-Abscheidung,
Figur 2 eine schematische Darstellung der Vorbeladungsstufe zur Vorbeladung des Adsorptionsmittels mit Reduktionsmittel, wie sie bei der Ausführungsform gemäß Figur 1 zum Einsatz kommen kann und

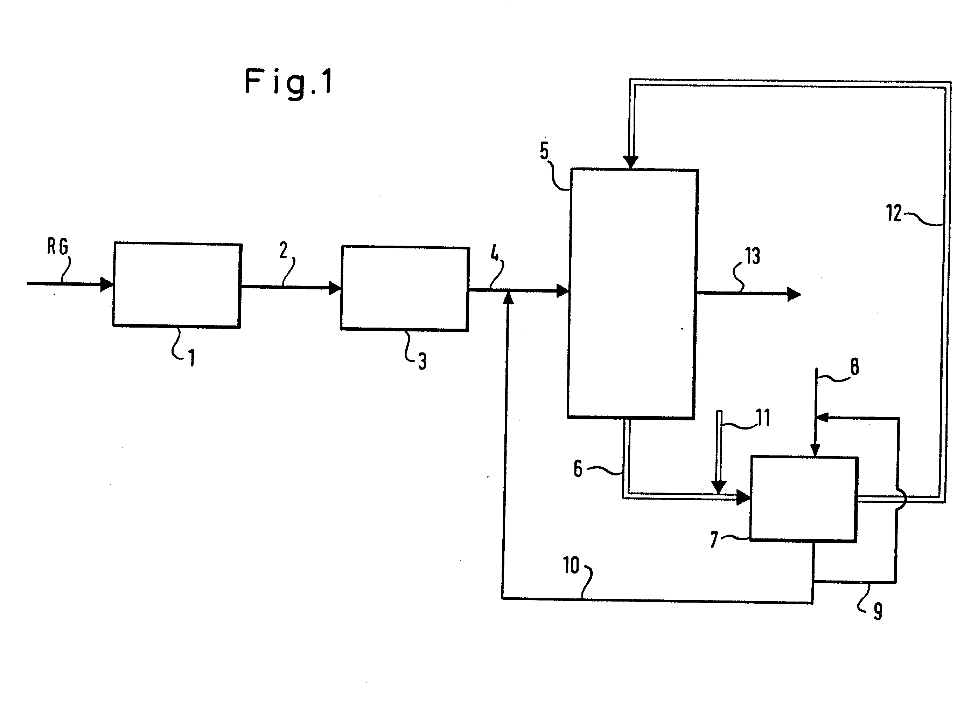

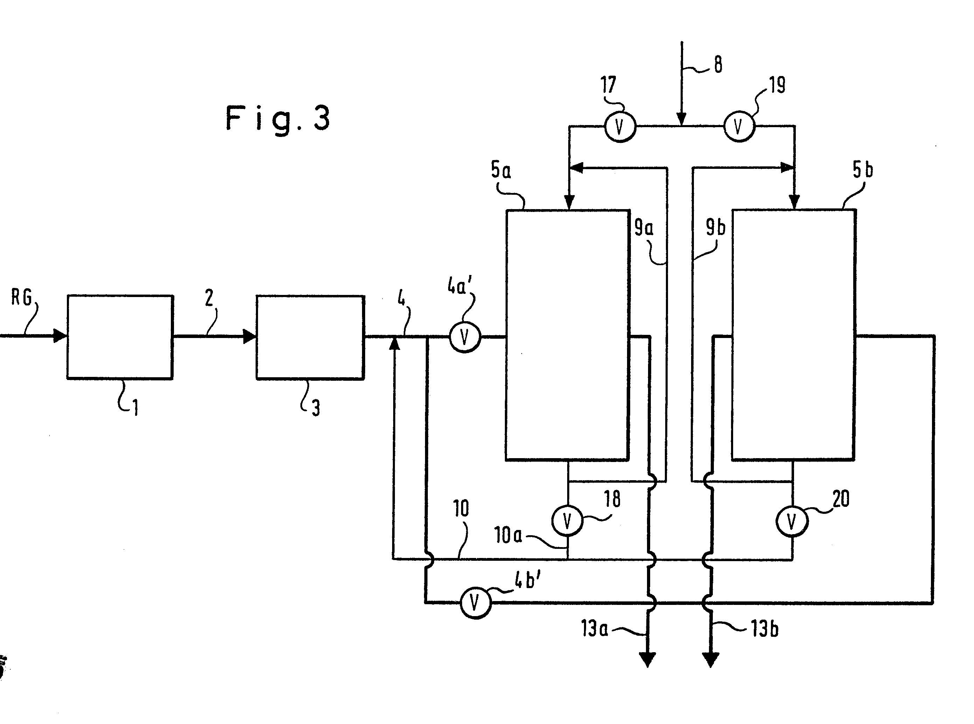

Figur 3 eine schematische Darstellung der Verfahrensführung, bei der zwei Reaktoren jeweils abwechselnd mit dem Reduktionsmittel beladen und anschließend vom zu entstickenden Abgas durchstromt werden. Gemäß Figur 1 wird Rauchgas RG einer Entschwefelungsanlage 1, die auf einem trockenen, halbtrockenen oder nassen Entschwefelungsverfahren basiert, entschwefelt. Beispiele für Entschwefelungsverfahren sind in der Beschreibungseinleitung angegeben. Das entschwefelte Gas wird über eine Rohrleitung 2 einem Wärmetauscher 3 zugeführt, um es auf die Eintrittstemperatur des Reaktors im Bereich von 60 °C - 180 °C zu erwärmen. Die Notwendigkeit einer Erwärmung und die Erwärmungstemperaturdifferenz hängt von dem vorgeschalteten Entschwefelungsverfahren ab. Über eine Leitung 4 wird das erwärmte und entschwefelte Rauchgas einem Adsorptionsmittelreaktor zugeführt, der vorzugsweise mit einem kohlestoffhaltigen Feststoff-Adsorptionsmittel gefüllt ist. Gemäß Figur 1 ist der Adsorpionsmittelreaktor ein Wanderbettreaktor, wobei abgezogenes Adsorptionsmittel nach bekannten Verfahren von Abrieb und evtl. Reaktionsprodukten der Rauchgasentschwefelung gereinigt wird. Über eine Leitung 6 wird das Adsorptionsmittel in eine Vorbeladungsstufe 7 eingeführt. In diese Vorbeladungsstufe wird über eine Leitung 8 entweder reines Reduktionsmittel, z.B. Ammoniak oder eine Mischung aus Reduktionsmittel mit einem Verdünnungsgas eingeführt, wobei das Adsorptionsmittel beträchtliche Mengen des Reduktionsmittels an seiner inneren Oberfläche speichert. Über eine Leitung 9 wird das Reduktionsmittel im Kreislauf geführt und über eine Leitung 10 wird überschüssiges Reduktionsmittel in die Leitung 4 eingespeist, d.h. in die Gasphase vor dem $NO_x$-Abscheidereaktor 5 eingemischt. Über eine Leitung 11 wird frisches Adsorptionsmittel zugeführt, das den hinter Reaktoraustritt - in nicht gezeigter bekannter Weise - entfernten Abrieb ersetzt und in der Vorbeladungsstufe 7 zusammen mit dem aus dem Reaktor 5 abgezogenen Adsorptionsmittel mit dem Reduktionsmittel beladen wird. Die Zufuhr des insgesamt vorbeladenen Adsorptionsmittels aus der Vorbeladungsstufe 7 zur $NO_x$-Abscheidestufe des Reaktors erfolgt über eine Leitung 12. Aus dem Reaktor 5 wird das entstickte Reingas über eine Leitung 13 abgezogen. Somit steht im Reaktor die für die $NO_x$-Abscheidung erforderlich Reduktionsmittelmenge zur Verfügung, wobei je nach Behandlung des Adsorptionsmittels mit Reduktionsmittel $NO_x$-Abscheidegrade zwischen 20 % - 95 % eingestellt werden können, wobei zugleich unzulässig hohe Konzentrationen von Reduktionsmittel im Abgas in der Leitung 13 vermieden werden.

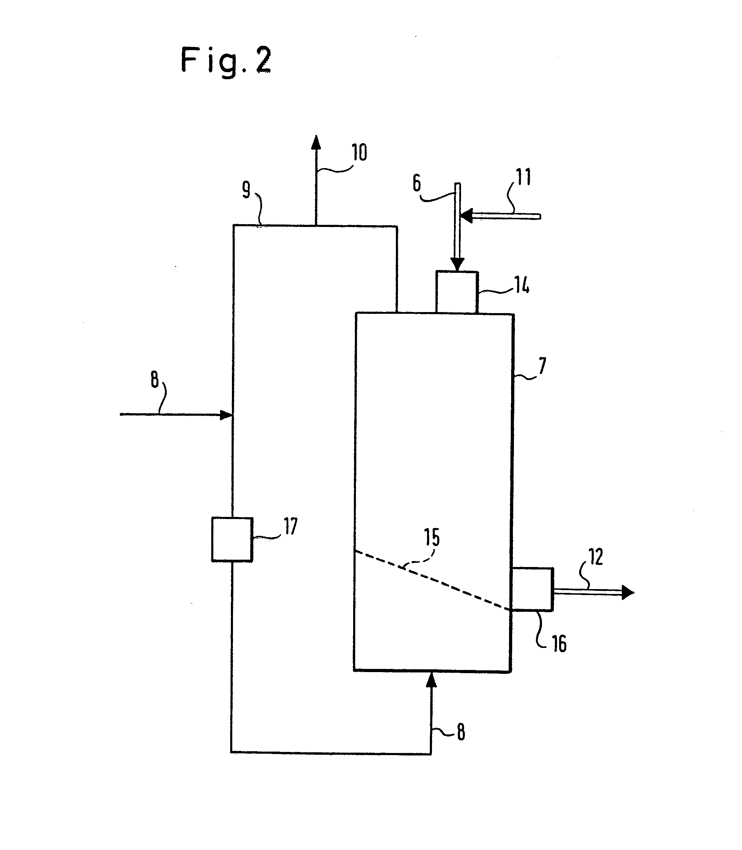

In der Figur 2 ist eine bevorzugte Ausführungsform für die Vorbeladungsstufe 7 dargestellt. Die Vorbeladung des über Leitung 6 herangeführten Adsorptionsmittels mit Reduktionsmittel erfolgte bei dem gezeigten Beispiel in einem Wanderschichtreaktor 7, in dessen oberem Teil das Adsorptionsmittel aus der $NO_x$-Abscheidestufe 5 über eine gasdichte Schleuse 14 zugeführt wird und während der Wanderung durch den Reaktor 7 mit dem Reduktionsmittel 8 im Gegenstrom beladen wird. Oberhalb eines gasdurchlässigen schräggestellten Verteilerbodens 15 wird vorbeladenes Adsorptionsmittel über eine gasdichte Schleuse 16 abgezogen und über Leitung 12 dem Adsorptionsmittelreaktor 5 zugeführt, z.B. pneumatisch oder mechanisch über ein Becherwerk. Über die Leitung 11 wird frisches Adsorptionsmittel zugegeben, das den Abrieb in der $NO_x$-Abscheidestufe 5 ersetzt. Das Reduktionsmittel wird über ein Gebläse 17 und die Leitung 8 dem Hohlraum unter dem gasdurchlässigen Verteilerboden 3 zugeführt, der für eine gleichmäßige Verteilung des Reduktionsmittels über das Adsorptionsmittelwanderbett 7 sorgt. Am Kopf der Vorbeladungsstufe 7 wird über Leitung 9 ein geringer Anteil an Reduktionsmittel abgezogen. Ein Teilstrom des so abgezogenen Reduktionsmittelüberschusses kann über Leitung 10 in die Gasphase vor dem Adsorptionsmittelreaktor 5 eingemischt werden. Der für die jeweilige $NO_x$-Abscheidung erforderliche Reduktionsmittelbedarf wird in gezeigter Weise über Leitung 8 eingebracht, in die das Gebläse 17 eingeschaltet ist. Wobei - wie bereits erwähnt - über Leitungen 8 und 9 das Beladungskreis im Kreislauf geführt werden kann.

Bei der Ausführungsform gemäß Figur 3 sind zwei Adsorptionsmittelreaktoren 5a und 5b vorgesehen, welche als Festbett- oder Wanderbettreaktoren betrieben werden können. Diese werden vom Rauchgas im Gegen- oder Gleichstrom, vorzugsweise Kreuzstrom beaufschlagt. Vor Beaufschlagung des Reaktors 5a mit zu reinigendem Rauchgas wird über die Zuleitung 8 bei geöffneten Ventilen 17 und 18 bzw. geschlossenen Ventilen 19 und 20 das Reduktionsmittel bzw. Reduktionsmittel-Verdünnungsgas-Gemisch durch den Reaktor 5a geleitet. Die Anteile am Reduktionsmittel, die nicht von dem Adsorptionsmittel aufgenommen werden, können über die Leitung 9a im Kreislauf gefahren werden oder über die Leitung 10a, 10 in das Rauchgas eingemischt werden. Sobald das Adsorptionsmittel im Reaktor 5a in der gewünschten Weise mit Reduktionsmittel beladen ist, wird das Rauchgas bei geöffnetem Absperrorgan 4a' - bzw. geschlossenem Absperrorgan 4b' - durch den Reaktor 5a geleitet und verläßt diesen von Stickoxiden gereinigt über Leitung 13a.

Reaktor 5b wird - während der Beaufschlagung des Reaktors 5a mit Rauchgas - bei geöffenten Ventilen 19 und 20 und geschlossenen Ventilen 17 und 18 in der vorstehend beschriebenen Weise mit Reduktionsmittel unter Kreislauf über Leitung 9b beaufschlagt.

Sobald der Stickoxidanteil im Rauchgas hinter Reaktor 5a nicht mehr unterhalb der geforderten Konzentrationsgrenze liegt, wird das Rauchgas bei geschlossenem Absperrorgan 4a' - bzw. geöffnetem Absperrorgan 4b' - durch den Reaktor 5b geleitet. Reaktor 5a wird jetzt analog der im Zusammenhang mit dem Reaktor 5b beschriebenen Betriebsweise mit Reduktionsmittel beaufschlagt. Die Reaktoren 5a und 5b werden somit wechselweise für die Stickoxidabscheidung eingesetzt. Die Vorbeladung des Adsorptionsmittels mit dem Reduktionsmittel hat dabei jeweils so zu erfolgen, daß die zu erzielende Beladungshöhe innerhalb der Zeit erreicht wird, die der jeweils andere Reaktor mit Rauchgas beaufschlagt werden kann. Der Beladungsgrad des Adsorptionsmittels kann z.B. über den Volumenstrom des Reduktionsmittels bzw. dessen Konzentration im Reduktionsmittelgemisch eingestellt werden.

### Beispiel

Das Rauchgas einer trockenentaschten Steinkohlenfeuerung weist hinter einer auf Kalkbasis arbeitenden Rauchgasentschwefelungsanlage und der Wiederaufheizung folgende Daten aus:

| | | |
|---|---|---|
| Rauchgasvolumenstrom: | | $100.000 \ m^3/h$ i.N. |
| Temperatur | : | $90 \ °C$ |
| Sauerstoffgehalt | : | 6,5 Vol. % |
| $SO_x$-Gehalt | < | $400 \ mg \ SO_2/m^3$ i.N. |
| $NO_x$-Gehalt | : | $650 \ mg/m^3$ i.N. |
| | | (gerechnet als $NO_2$) |

Der Wanderbettreaktor wird in diesem Beispiel zweistufig ausgeführt, so daß in der 1. Stufe die hinter der Rauchgasentschwefelungsanlage enthaltenen $SO_2$-Reste nach dem bekannten Verfahren an kohlenstoffhaltigen Adsorptionsmitteln abgeschieden werden. Das mit Schwefelsäure beladene Adsorptionsmittel wird nach dem bekannten Verfahren thermisch regeneriert und am oberen Kopf des Reaktors wieder aufgegeben.

Der Wanderbettreaktor zur $NO_x$-Abscheidung, der mit Aktivkoks gefüllt ist, hat eine Anströmfläche von ca. $150 \ m^2$ und eine Schichttiefe von 2,0 m. Als Reduktionsmittel wird Ammoniak verwendet, von dem stündlich 17,2 kg benötigt werden. Die erforderliche Ammoniakmenge wird

a) entweder nur über den Aktivkoks in den Reaktor eingebracht, wobei stündlich 850 kg Aktivkoks aus der Vorbeladungsstufe am oberen Kopf des Adsorbers aufgegeben
wird. Dieselbe Aktivkoksmenge wird am Adsorberfuß abgezogen und in die Vorbeladungsstufe eingeführt, in der
17,2 Kg pro Stunde an Ammoniak vom Aktivkoks adsorbiert
werden.

b) im Verhältnis 1 : 1 sowohl über den Aktivkoks in den
Reaktor eingebracht, als auch durch Eindüsen von Ammoniak in das Rauchgas vor Reaktor. Die stündlich am
Adsorberfuß abgezogene Aktivkoksmenge beträgt 425 kg
und in das Rauchgas werden 8,6 kg Ammoniak pro Stunde
eingedüst.

Das auf diese Weise gereinigte Rauchgas enthält nach dem
Austritt aus dem Adsorptionsmittelreaktor in beiden Fällen
a) und b) an Stickoxiden 195 $mg/m^3_n$, gerechnet als $NO_2$.

Im Fall a) beträgt der Gehalt an überschüssigem Ammoniak
im gereinigten Abgas 6,0 $mg/m^3_n$ und im Fall b) 10 $mg/m^3_n$.

1

STEAG Aktiengesellschaft
Bismarckstraße 54

4300 Essen 1

Stichwort: Vorbeladung
Az. 805

Verfahren zur Abscheidung von $NO_x$ aus Gasen, insbesondere Rauchgasen

## Patentansprüche

1. Verfahren zur Abscheidung von $NO_x$ aus Gasen, insbesondere Rauchgasen, bei dem das $NO_x$ aus dem Rauchgas an
einem festen Adsorptionsmittel, insbesondere Aktivkohle/Aktivkoks, unter Zugabe eines Reduktionsmittels,
insbesondere Ammoniak, CO, Wasserstoff, katalytisch
abgetrennt wird und bei dem das Adsorptionsmittel mehrmals hintereinander mit dem zu entstickenden Gas in
Kontakt gebracht wird,

dadurch gekennzeichnet,

daß das Adsorptionsmittel mit zumindest einem Anteil
an Reduktionsmittel vorbeladen und danach mit dem zu
entstickenden Gasstrom in Berührung gebracht wird.

2. Verfahren nach Anspruch 1,

dadurch gekennzeichnet,

daß die Vorbeladung durch Zusammenführen eines Adsorptionsmittelstromes und eines Reduktionsmittelstromes
in Gleichstrom, Gegenstrom oder Kreuzstrom oder durch
Durchströmen eines ruhenden Adsorptionsmittelbetts
mit dem Reduktionsmittel erfolgt.

3. Verfahren nach Anspruch 1 oder 2,

dadurch gekennzeichnet,

daß das beladene Adsorptionsmittel in einen vorentschwefelten Rauchgasstrom eingebracht wird, der nach der Entschwefelung auf eine Temperatur von 60 °C - 180 °C, vorzugsweise 80 °C - 180 °C gebracht wird.

4. Verfahren nach einem der Ansprüche 1 - 3,

dadurch gekennzeichnet,

daß das vorbeladene Adsorptionsmittel einem Wanderbettreaktor aufgegeben wird.

5. Verfahren nach einem der Ansprüche 1 - 3,

dadurch gekennzeichnet,

daß das vorbeladene Adsorptionsmittel einem Festbettreaktor aufgegeben wird.

6. Verfahren nach einem der Ansprüche 1 - 5,

dadurch gekennzeichnet,

daß das zu entstickende Abgas und das Reduktionsmittel zwei Adsorptionsmittelreaktoren aufgegeben wird derart, daß in einem die Abscheidung von $NO_x$ und in dem anderen die Vorbeladung mit dem Reduktionsmittel erfolgt.

7. Verfahren nach einem der Ansprüche 1 - 6,

dadurch gekennzeichnet,

daß zur Vorbeladung das Reduktionsmittel in Zumischung mit einem Verdünnungsgas verwendet wird.

8. Verfahren nach einem der Ansprüche 1 - 7,

dadurch gekennzeichnet,

daß das bei der Vorbeladung überschüssige Reduktionsmittel im zu entstickenden Abgasstrom vor dessen Kontakt
mit dem vorbeladenen Adsorptionsmittel zugesetzt wird.

9. Verfahren nach einem der Ansprüche 1 - 8,

dadurch gekennzeichnet,

daß frisches Adsorptionsmittel zum Ausgleich des Abriebs dem Adsorptionsmittel bei Vorbeladung zugesetzt
wird.

10. Verfahren nach einem der Ansprüche 1 - 9,

dadurch gekennzeichnet,

daß die Vorbeladung des Adsorptionsmittels über die
Feststoffverweilzeit mit dem Reduktionsmittel, die
Konzentration des Reduktionsmittels im Beladungsgas
und/oder die Temperatur in der Vorbeladungsstufe eingestellt wird.

11. Verfahren nach einem der Ansprüche 1 - 10,

dadurch gekennzeichnet,

daß entsprechend der Menge der abzuscheidenden Stickoxide ein Anteil von 20 % - 100 %, vorzugsweise 50 % - 100 %,
der erforderlichen Reduktionsmittelmenge in eine Vorbeladungsstufe eingeleitet und dort vom Adsorptionsmittel
aufgenommen wird, während die verbleibenden Anteile
an Reduktionsmittel von 80 % - 0 %, vorzugsweise 50 % - 0 %,

4

in das Abgas vor dessen Inberührungbringen mit dem beladenen Adsorptionsmittel zugesetzt werden.

12. Verfahren nach einem der Ansprüche 1 - 11,

dadurch gekennzeichnet,

daß das Molverhältnis vom insgesamt verwendeten Reduktionsmittel zum abgeschiedenen Stickoxid im Falle der Verwendung von Ammoniak als Reduktionsmittel zwischen 0,9 und 1,2 liegt.

13. Anlage zur Abscheidung von $NO_x$ gemäß dem Verfahren nach einem der Ansprüche 1 - 12 mit einem Adsorptionsmittelreaktor,

dadurch gekennzeichnet,

daß dem Adsorptionsmittelreaktor ein Vorbeladungsgefäß vorgeschaltet ist, der mit einem Reduktionsmittelvorrat zur Vorbeladung des Adsorptionsmittels verbunden ist.

Fig.1

0210392

0210392

# Fig. 2

Fig. 3